# EUROPÄISCHE PATENTSCHRIFT

(11) **EP 3 197 029 B1**
(45) Veröffentlichungstag und Bekanntmachung des Hinweises auf die Patenterteilung: **29.05.2019**
(21) Anmeldenummer: 16151828.7
(22) Anmeldetag: 19.01.2016
(51) Int. Cl.: H02K 21/24

(54) **ELEKTROMOTORISCH ARBEITENDE VORRICHTUNG ZUM BILDEN EINER DREHERKANTE, INSBESONDERE FÜR EINE WEBMASCHINE, SOWIE PROJEKTILWEBMASCHINE MIT EINER SOLCHEN VORRICHTUNG**
DEVICE USING AN ELECTRIC MOTOR FOR FORMING A LENO SELVEDGE, IN PARTICULAR FOR A LOOM, AND PROJECTILE WEAVING LOOM EQUIPPED WITH SAID DEVICE
DISPOSITIF A MOTEUR ELECTRIQUE DESTINE A FORMER UNE LISIERE DE GAZE, EN PARTICULIER POUR UN METIER A TISSER, ET METIER A TISSER A PROJECTILES DOTE D'UN TEL DISPOSITIF

(43) Veröffentlichungstag der Anmeldung: 26.07.2017
(73) Patentinhaber: Gebrüder Klöcker GmbH, 46325 Borken-Weseke (DE)
(72) Erfinder: SCHWEMMLEIN, Christoph, Dr., 46325 Borken-Weseke (DE); HOCKEMEYER, Kurt, 46325 Borken-Weseke (DE)
(74) Vertreter: Patentanwälte Walther Hinz Bayer PartGmbB

(56) Entgegenhaltungen:
- EP-A1- 2 012 408
- EP-A2- 1 050 437
- WO-A2-2010/048928
- DE-A1- 19 902 370
- DE-C2- 19 733 261
- US-A1- 2013 187 489
- US-A1- 2015 015 174

## Beschreibung

Die Erfindung betrifft einerseits eine elektromotorisch arbeitende Vorrichtung zum Bilden einer Dreherkante, insbesondere für eine Webmaschine und andererseits eine Projektilwebmaschine mit einer solchen Vorrichtung.

Eine solche elektromotorisch arbeitende Vorrichtung zum Bilden einer Dreherkante umfasst einen Rotor mit zwei diagonal einander gegenüberliegend in dem Rotor angeordneten Fadenführungsösen für die Dreherfäden, sowie einen den Rotor aufnehmenden Stator, wobei der Stator einen Spulenkäfig aufweist, wobei der Spulenkäfig eine Mehrzahl von Spulen aufnimmt, wobei die Vorrichtung eine Steuerung umfasst.

Aus dem Stand der Technik sind Vorrichtungen zum Bilden einer Dreherkante, insbesondere für schützenlose Webmaschinen, umfassend einen Elektromotor mit einem Rotor bekannt, wobei der Rotor beabstandet zueinander mindestens zwei Führungselemente für die Dreherfäden zum Bilden der Dreherkante mit den entsprechenden Schussfäden aufweist. So ist aus der DE PS 44 05 776 eine Vorrichtung bekannt, bei der ein elektrisch ansteuerbarer Stellmotor vorgesehen ist, der eine Dreherscheibe antreibt, wobei die Dreherscheibe den Läufer oder Rotor des elektrisch ansteuerbaren Stellmotors bildet. Der Stator selbst ist durch ein Trägerteil an der Webmaschine anbringbar und zwar vorzugsweise in einem zwischen den Längsstreben liegenden Freiraum vor den ersten Webschäften der Webmaschine. Im Einzelnen ist hierbei vorgesehen, dass die Dreherscheibe, die den Läufer des elektrisch ansteuerbaren Stellmotors bildet, als Führungselemente zwei einander gegenüberliegend angeordnete Öffnungen für die Dreherfäden aufweist. Dieser bekannte Rotationskantendreher einer Webmaschine arbeitet nun derart, dass er einige Umdrehungen in die eine Richtung durchführt und hierbei nach jeweils einer Umdrehung einen Schussfaden abbindet. Es entsteht hierbei somit eine Volldreherkante. Auf der Seite der Zuführung der beiden Dreherfäden verdrillen sich diese Dreherfäden entsprechend der Anzahl der Umdrehungen der Dreherscheibe, sodass, um diese Verdrillung aufzuheben eine Drehrichtungsumkehr angezeigt ist, mithin also die Dreherscheibe in genau die entgegengesetzte Richtung rotieren muss. Die Anzahl der Umdrehungen in jede Richtung muss hierbei im zeitlichen Mittel gleich sein. Würde keine Drehrichtungsumkehr vorgenommen werden, so würden die Dreherfäden aufgrund der ansteigenden Spannung wegen der zunehmenden Verdrillung irgendwann reißen.

Ein ähnlicher Rotationskantendreher mit elektromotorischem Antrieb ist aus der DE 19733261 C2 bekannt, wobei dieser Motor nach Art eines Servomotors arbeitet. Insofern ist eine Messung des Drehwinkels zum Zwecke der Erfassung einer definierten Winkellage der Dreherscheibe vorgesehen, um die Rotation der Dreherscheibe mit der Fachöffnung der Webmaschine abzubinden. Das heißt, dass die Dreherscheibe eine kontinuierliche auf die Geschwindigkeit in Bezug auf die Hubbewegung der Webschäfte zur Fachöffnung bzw. dem Fachschluss der Webmaschine abgestimmte Bewegung durchführt.

Aus der EP 839219 B1 ist nun ein sogenannter Propellerdreher bekannt. Ein solcher Propellerdreher zeichnet sich durch zwei am Läufer oder Rotor eines Elektromotors diagonal gegenüberliegend angeordnete Arme für die Dreherfäden und somit durch eine geringe bewegte Masse aus, weshalb, wie dies in der EP 1019571 B1 beschrieben ist, ein solcher Propellerdreher unabhängig von der Bewegung der Webschäfte ansteuerbar ist. Das heißt, die Beschleunigung des Propellerdrehers ist derart, dass zum Zeitpunkt der Öffnung des Dreherfachs durch die Schäfte der Webmaschine, die Arme des Propellerdrehers mit den endseitig angeordneten Ösen, durch die die Dreherfäden laufen, das Fach bereits aufgespannt haben. Somit wird der Propellerdreher schaftunabhängig angesteuert. Das heißt, mit dem bekannten Propellerdreher wird sichergestellt, dass sich zu Beginn des Schusseintrages der Dreherkantenvorrichtung die beiden Dreherfäden in der Stellung "Fachoffen" befinden und nach Abschluss des Schusseintrages die Dreherfäden unmittelbar in die Geschlossenstellung des Fachs überführt werden. Somit kommt es ausschließlich darauf an, dass die jeweilige Endstellung, das heißt Fachoffen bzw. Fachgeschlossen, durch die Vorrichtung spätestens dann erreicht wird, wenn die Webschäfte eine entsprechende Stellung einnehmen. Das bedeutet, dass ein für jeden Zeitpunkt synchroner Bewegungsablauf der Bewegung des Rotors des Elektromotors mit der Bewegung der Webschäfte nicht erforderlich ist.

Aus der WO 2010/048928 A2 ist ein sogenannter Transversalflussmotor bekannt, wobei solche Motoren beispielsweise als Radmotoren zum Antrieb von Fahrzeugen Verwendung finden. Diese Literaturstelle zeigt im Einzelnen einen Elektromotor mit einem Spulenkäfig mit vier Spulen, die nierenförmig ausgebildet sind, wobei jeweils zwei, ein Spulenpaar bildende Spulen diagonal zueinander gegenüberliegend in dem Spulenkäfig angeordnet sind. Hierbei ist ebenfalls vorgesehen, die Spulen eines Spulenpaares zu gleicher Zeit in identischer Weise zu bestromen.

Bekannt ist außerdem bei Webmaschinen mit langen Kettbäumen im Gewebe eine sogenannte Schnittgasse vorzusehen. Hierbei wird das Gewebe geteilt, wobei im Bereich der Schnittgasse, um ein Aufriffeln des Gewebes zu verhindern, zwei Dreherkantenvorrichtungen vorgesehen sind, um zu jeder Seite eine Dreherkante zu erstellen. Die Anordnung eines oder mehrerer Propellerdreher in der Schnittgasse hat jedoch den Nachteil, weil dieser relativ breit baut, dass die Schnittgasse entsprechend breit ist, was bedeutet, dass "Gewebe verloren geht".

Um die Schnittgasse möglichst klein zu halten, ist man insofern nach wie vor bestrebt, elektromotorisch arbeitende Vorrichtungen der eingangs genannten Art einzusetzen, die relativ schmal bauen, und einen verhältnismäßig großen Durchmesser besitzen. Schmal deshalb, weil zumindest zwei dieser Vorrichtungen in einer Schnittgasse angeordnet werden müssen, und insofern der Platzbedarf minimiert werden kann; vom Durchmesser her groß bedeutet, dass die Fadenführungsösen für die Dreherfäden einen verhältnismäßig großen Abstand aufweisen sollen, was zur Folge hat, dass das durch die Vorrichtung aufgespannte Fach verhältnismäßig groß ist, sodass immer gewährleistet ist, dass der Schussfaden nicht im durch die Dreherfäden aufgespannten Fach hängenbleibt.

Als nachteilig hat sich allerdings herausgestellt, dass aufgrund von Fertigungstoleranzen die Gefahr besteht, dass der Rotor im ihn aufnehmenden Stator während der Rotationsbewegung pendelt. Bei höheren Drehzahlen, das heißt bei Drehzahlen von 300 Schuss pro Minute und mehr, kann es vorkommen, dass der Antrieb in Resonanz gerät. Ist die elektromotorisch arbeitende Vorrichtung nach Art eines Schrittmotors ausgebildet, dann besteht als Folge hiervon die Gefahr von sogenannten Schrittverlusten. Das heißt, der Drehwinkel, den man steuerungstechnisch erreichen will, um das Fach zur maximalen Höhe aufzuspannen, ist nicht erreichbar. Wenn also das Fach nicht komplett geöffnet werden kann, hat dies zur Folge, dass der Schussfaden gegebenenfalls im Fach beim Einführen des Schussfadens hängenbleibt. Sind Schrittverluste aufgetreten, muss die elektromotorisch arbeitende Vorrichtung neu justiert werden, was bedeutet, dass der Antrieb auf seine Referenzposition gefahren wird, das heißt, auf den Ausgangspunkt oder die Ausgangsstellung für den Rotor, von dem ab die Zählung der Schritte je nach Drehrichtung addierend oder subtrahierend erfolgt. Dies ist mit verhältnismäßig großem zeitlichen Aufwand verbunden, weshalb Wege gesucht werden, um ein solches Schwingen des Rotors der elektromotorisch arbeitenden Vorrichtung im Stator zu vermeiden.

In diesem Zusammenhang wurde bereits darauf hingewiesen, dass die elektromotorisch arbeitende Vorrichtung Spulen aufweist. Es wurde nun herausgefunden, dass nach einer ersten Ausführungsform, wenn der Spulenkäfig vier Spulen aufweist, wobei jeweils zwei ein Spulenpaar bildende Spulen diagonal, also im Winkel von 180°, zueinander gegenüberliegend in dem Spulenkäfig angeordnet sind, und wenn die Spulen eines Spulenpaars zu gleicher Zeit und in identischer Weise bestrombar sind und der Spulenkäfig axial angeordnete Schlitze zeigt, die der Aufnahme von Jochen dienen, wobei die Joche mit den vier Spulen die vier Magnetkreise bilden und der Stator darüber hinaus eine Rückschlussplatte umfasst, die ebenfalls Schlitze zur Aufnahme von Jochen aufweist, eine solche Pendelbewegung des Rotors, wie sie zuvor beschrieben worden ist, nicht auftritt, da sich die durch die Spulen erzeugten Momente auf den Rotor aufheben, der Rotor somit keine Krafteinwirkung in axialer Richtung der Vorrichtung erhält. Das heißt, dass der Rotor in seinem Lauf zentriert wird, Kippmomente auf den Rotor werden somit nicht ausgeübt. Hierbei kann im Einzelnen vorgesehen sein, dass die beiden Spulen eines Spulenpaares, die zu gleicher Zeit in identischer Weise bestrombar sind, elektrisch zusammengeschaltet sind, also beispielsweise parallel oder in Serie geschaltet sind oder aber es ist alternativ dazu eine Steuerung vorgesehen, wobei durch eine solche Steuerung die Bestromung der Spulen eines Spulenpaares, wie oben beschrieben, in identischer Weise erfolgt.

Eine zweite Ausführungsform zeichnet sich dadurch aus, dass der Spulenkäfig sechs Spulen aufnimmt, wobei jeweils drei im Winkel von 120° zueinander angeordnete Spulen zu gleicher Zeit in identischer Weise bestrombar sind. Auch hier gilt, dass der Spulenkäfig axial angeordnete Schlitze zeigt, die der Aufnahme von Jochen dienen. Die Joche bilden mit den sechs Spulen die sechs Magnetkreise. Der Stator umfasst darüber hinaus eine Rückschlussplatte, die ebenfalls Schlitze zur Aufnahme von Jochen zeigt. Auch durch eine solche Anordnung kann eine Pendelbewegung des Rotors, wie sie zuvor beschrieben worden ist, vermieden werden, da sich auch hier die durch die Spulen erzeugten Momente auf den Rotor aufheben. Das heißt, auch hier wird der Rotor in seinem Lauf zentriert, Kippmomente auf den Rotor werden nicht ausgeübt. Um die Spulen zu gleicher Zeit und in identischer Weise zu bestromen können sie insofern in Serie oder parallel geschaltet sein. Alternativ kann auch hier eine Steuerung vorgesehen sein, wobei durch die Steuerung der jeweils drei im Winkel von 120° zueinander angeordneten Spulen die Bestromung zu gleicher Zeit und in identischer Weise erfolgt.

Das heißt, egal nach welcher Ausführungsform, werden sich durch die jeweilige Anordnung und Bestromung der Spulen die unerwünscht auftretenden axialen Kräfte senkrecht zur Zeichenebene zu Null addieren, sodass Resonanzen anregende Pendelmomente auf den Rotor vermieden werden.

Vorteilhaft ist allerdings eine Ausführungsform mit vier Spulen, da diese verlustärmer ist als eine mit sechs Spulen, da die Anzahl der Zwischenräume zwischen den Spulen geringer ist als bei sechs Spulen.

Um die Mikroschrittfähigkeit eines Schrittmotors als elektromotorischen Antrieb zu optimieren, ist ein Versatz von ¼ des normalen Winkelabstands vorgesehen. Außerdem werden jeweils die Hälfte der Joche eines Pols mit einem negativen und die andere Hälfte mit einem positiven Vorzeichen des Winkelversatzes versehen. Anders ausgedrückt bedeutet das, dass jeweils eine Hälfte nach links um eine ¼ Polteilung und die andere Hälfte nach rechts um eine ¼ Polteilung versetzt wird. Hierdurch findet eine Glättung der Drehmomente statt, was einem Betrieb im Mikroschrittmodus entgegenkommt.

Für den Betrieb im Mikroschrittmodus ist ebenfalls die Dämpfung von Resonanzen von entscheidender Bedeutung, da gerade bei kritischen Drehzahlen Schrittverluste durch die Anregung des schwingungsfähigen Systems vermieden werden können. Denn Schrittverluste haben immer zur Folge, dass das Dreherfach nicht bis zur vollen Größe aufgespannt werden kann, was weiterhin zur Folge haben kann, dass der Schussfaden nicht ordnungsgemäß in das Fach eingebracht werden kann.

Des Weiteren ist vorgesehen, dass die Spulen, um eine kreisförmige Ausgestaltung des Spulenkäfigs zu ermöglichen, nierenförmig ausgebildet sind.

Als besonders vorteilhaft hat sich herausgestellt, dass der Spulenkäfig des Stators zur Verminderung von Wirbelströmen aus einem elektrisch nicht leitfähigen Material, insbesondere einem Kunststoff ausgebildet ist, wobei zudem nach einem weiteren Merkmal der Erfindung vorgesehen ist, dass der Kunststoff von hoher Festigkeit ist, um Verformungen des Motors während des Betriebes auch bei höheren Temperaturen zu vermeiden; darüber hinaus kann durch die Verwendung von Kunststoff auch Gewicht gespart werden. Als besonders vorteilhaft hat sich hierbei der Einsatz eines Kunststoffes mit der Bezeichnung PEEK (Polyetheretherketon) herausgestellt.

Es wurde bereits zu eingangs erwähnt, dass die elektromotorisch arbeitende Vorrichtung zum Bilden einer Dreherkante schmal ausgebildet sein soll, um den Platzbedarf im Bereich der Schnittgasse zu minimieren. In diesem Zusammenhang ist vorgesehen, dass der Rotor eine Magnetscheibe aufweist, wobei die Magnetscheibe eine Mehrzahl von abwechselnd positiv und negativ magnetisierten Segmenten aufweist. Die Magnetscheibe selbst hat eine Stärke von etwa 1 mm. Auch hierdurch wird erreicht, dass die elektromotorisch arbeitende Vorrichtung schmal baut, das heißt, ein Durchmesser zu Breite- bzw. Längenverhältnis von 4,3 / 1 verwirklicht werden kann. Die Ausrichtung der Magnetsegmente ist hierbei axial, das heißt, es folgt ein axialer Magnetschluss.

Als besonders vorteilhaft hat sich herausgestellt, dass wenn der Rotor eine Laufhülse zur Aufnahme der Magnetscheibe und eines Lagers aufweist, die Laufhülse die beiden diagonal einander gegenüberliegenden Fadenführungsösen zur Führung der Dreherfäden besitzt. Um den Verschleiß in den Fadenführungsösen durch die Dreherfäden zu vermindern, kann des Weiteren vorgesehen sein, in den Fadenführungsösen Einsätze zum Verschleißschutz anzuordnen.

Das Lager kann als Wälzlager ausgebildet sein, insbesondere als Kugellager, um einen verschleißarmen Lauf des Rotors im Stator zu ermöglichen.

Die Erfindung betrifft auch eine Projektilwebmaschine mit mindestens einer Schnittgasse zur Teilung der Gewebebahn, die sich erfindungsgemäß dadurch auszeichnet, dass in der Schnittgasse mindestens eine vorzugsweise zwei Vorrichtungen gemäß einem oder mehrerer der Ansprüche 1 bis 9 angeordnet sind. Hierbei kann der Kettbaum durchgängig ausgebildet sein.

Anhand der Zeichnungen wird die Erfindung nachstehend beispielhaft näher erläutert.
- Fig. 1: zeigt zwei elektromotorisch arbeitende Vorrichtungen zum Bilden jeweils einer Dreherkante mit angedeutetem Gewebe in einer perspektivischen Darstellung;
- Fig. 2: zeigt die erfindungsgemäße Vorrichtung zum Bilden einer Dreherkante in einer Explosionsdarstellung;
- Fig. 3: zeigt einen Halbschnitt durch die erfindungsgemäße Vorrichtung zum Bilden einer Dreherkante gemäß Fig. 2;
- Fig. 4: zeigt schematisch die Anordnung von sechs Spulen im Spulenkäfig.

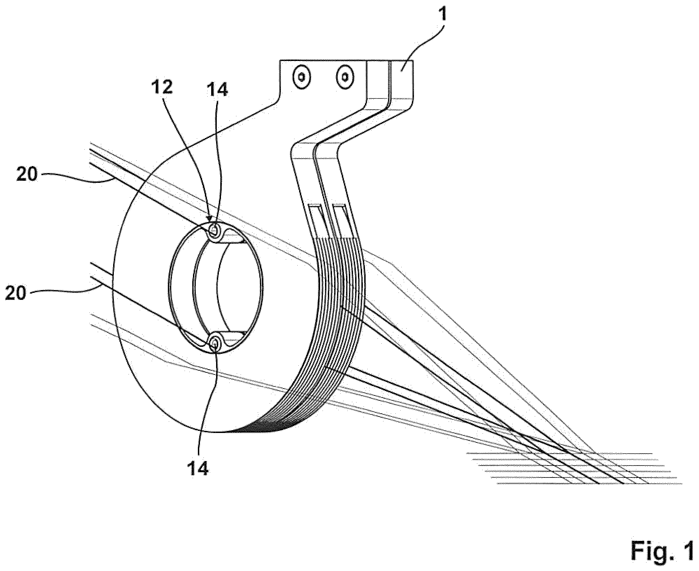

Gemäß Fig. 1 sind zwei Vorrichtungen 1 zum Bilden jeweils einer Dreherkante gezeigt, wobei zwischen den beiden Vorrichtungen ein geringfügiger Abstand vorgesehen ist, um die Dreherfäden 20, die durch die Fadenösen 14 geführt sind, in Richtung des Kettbaumes zu führen.

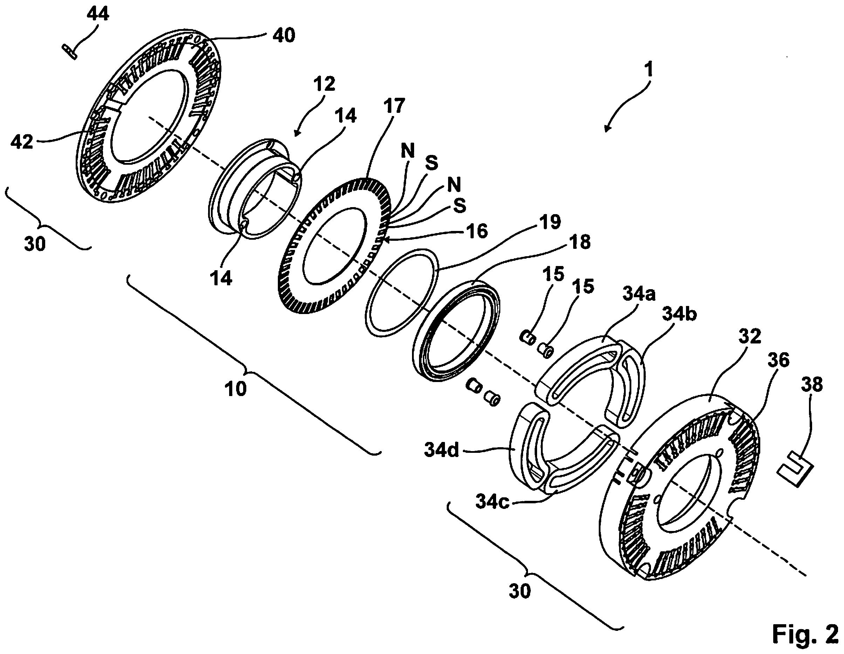

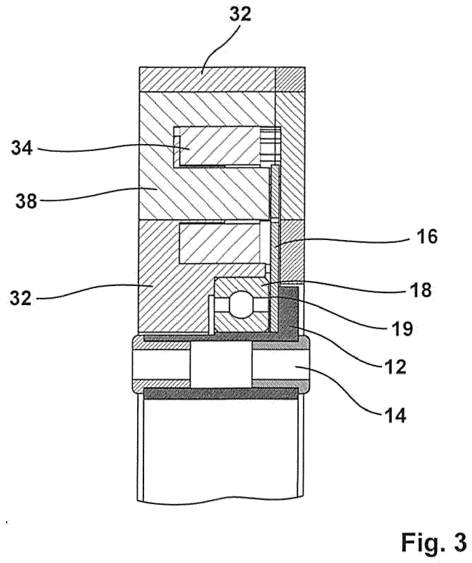

Gegenstand der Erfindung ist nun nach einer ersten Ausführungsform, die Ausbildung der elektromotorisch arbeitenden Vorrichtung zum Bilden einer Dreherkante gemäß den Figuren 2 und 3. Die in Fig. 2 in Form einer Explosionszeichnung dargestellte Vorrichtung zum Bilden einer Dreherkante umfasst die Bauteile eines Rotors 10 und eines den Rotor 10 aufnehmenden Stators 30. Der insgesamt mit 30 bezeichnete Stator umfasst den Spulenkäfig 32, der der Aufnahme der nierenförmig ausgebildeten Spulen 34a bis 34d dient. Der Spulenkäfig 32 zeigt axial angeordnete Schlitze 36, die der Aufnahme der mit 38 bezeichneten Joche dienen. Die Joche bilden mit den vier Spulen die vier Magnetkreise. Der Stator 30 umfasst darüber hinaus die Rückschlussplatte 40, die ebenfalls Schlitze 42 zur Aufnahme von Jochen 44 zeigt.

Die in dem Spulenkäfig 32 angeordneten Spulen 34a bis 34d sind derart in dem Spulenkäfig angeordnet, dass jeweils zwei Spulen 34a und 34c sowie 34b und 34d unmittelbar diagonal einander gegenüberliegend, das heißt im Winkel von 180° in dem Spulenkäfig 32 angeordnet sind. Die unmittelbar diagonal einander gegenüberliegenden Spulen 34a, 34c sowie 34b, 34d werden gleichzeitig in identischer Weise durch die Steuerung bestromt. Hierdurch wird erreicht, dass über die Magnetscheibe 16 des Rotors 10 keine Pendelmomente auf den Rotor ausgeübt werden können. Wenn die erfindungsgemäße Ansteuerung der Spule nicht vorgenommen würde, dann bestünde die Gefahr, dass aufgrund von Fertigungstoleranzen, und hier insbesondere im Lager, bei beispielsweise nacheinander vorgenommener Bestromung der einzelnen Spulen der Rotor pendelt. Dadurch nun, dass die diagonal einander gegenüberliegend in dem Spulenkäfig 32 angeordneten Spulen 34a bis 34d gleichzeitig mit dem gleichen Strom bestromt werden, treten solche Pendelbewegungen im Wesentlichen nicht auf. Dies verhindert auch die Entstehung von Resonanzen. Das heißt, die Dämpfung von Resonanzen ist für den optimalen Betrieb von Schrittmotoren von entscheidender Bedeutung, weil dadurch gerade bei kritischen Drehzahlen Schrittverluste durch die Anregung des schwingungsfähigen Systems, umfassend die Kombination mechanischer, elektrischer und magnetischer Komponenten, vermieden werden können. Schließlich dient auch der Mikroschrittbetrieb der Vermeidung von Resonanzen durch eine annähernd kontinuierliche Bestromung. Unter Vermeidung von großen, abrupten Sprüngen im Stromverlauf werden hochfrequente Anregungen und Resonanzen des schwingungsfähigen Systems und damit letztlich Schrittverluste vermieden.

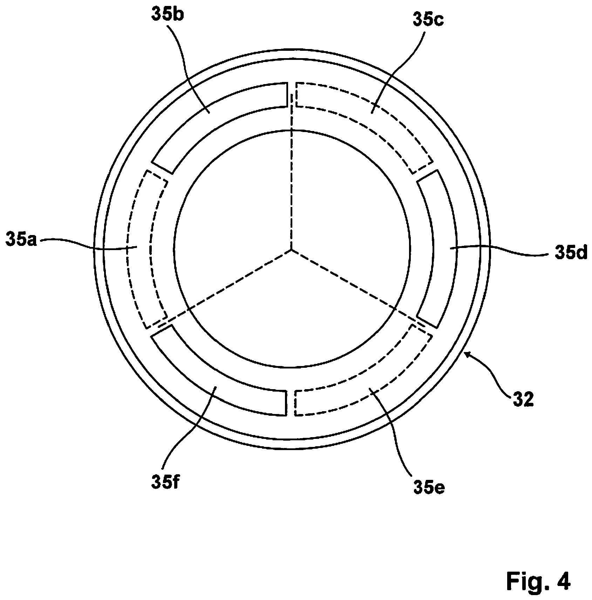

In der schematischen Darstellung gemäß Fig. 4, bei der im Spulenkäfig 32 sechs Spulen 35a bis 35f im Winkel von 120° zueinander angeordnet sind, erfolgt zur Vermeidung von Pendelbewegungen des Rotors die gleichzeitige und identische Bestromung jeweils der drei im Winkel von 120° angeordneten Spulen 35a, 35c und 35e bzw. der Spulen 35b, 35d und 35f.

Der Rotor 10 umfasst die Laufhülse 12, wobei die Laufhülse 12 die beiden einander diagonal gegenüberliegenden Fadenführungsösen 14 zur Führung der Dreherfäden aufweist. Die Fadenführungsösen 14 nehmen Einsätze 15 auf, die als Verschleißschutz dienen. Die Laufhülse 12 trägt darüber hinaus die Magnetscheibe 16, wobei die Magnetscheibe auf dem Umfang axial ausgerichtet eine Mehrzahl von magnetisierten Segmenten 17 aufweist, die jeweils zueinander gegensinnig gepolt sind. Darüber hinaus nimmt die Laufhülse 12 das mit 18 bezeichnete Lager mit dem Lagerring 19 auf, wobei das Lager 18 dafür sorgt, dass die Laufhülse 12 sich relativ zum Spulenkäfig 32 drehen kann.

### Bezugszeichenliste:

- 1: elektromotorische Vorrichtung zum Bilden einer Dreherkante
- 10: Rotor
- 12: Laufhülse
- 14: Fadenführungsösen
- 15: Einsatz
- 16: Magnetscheibe
- 17: magnetisiertes Segment
- 18: Lager
- 19: Lagerring
- 20: Dreherfäden
- 30: Stator
- 32: Spulenkäfig des Stators
- 34a: Spule
- 34b: Spule
- 34c: Spule
- 34d: Spule
- 35a: Spule
- 35b: Spule
- 35c: Spule
- 35d: Spule
- 35e: Spule
- 35f: Spule
- 36: Schlitz im Spulenkäfig zur Aufnahme des Jochs
- 38: Joch
- 40: Rückschlussplatte des Stators (Spulenkäfig)
- 42: Schlitz in der Rückschlussplatte
- 44: Joch

## Patentansprüche

1. Elektromotorisch arbeitende Vorrichtung (1) zum Bilden einer Dreherkante, umfassend einen Rotor (10) mit zwei diagonal zueinander gegenüberliegend in dem Rotor (10) angeordneten Fadenführungsösen (14) für die Dreherfäden, sowie einen den Rotor (10) aufnehmenden Stator (30), wobei der Stator (30) einen Spulenkäfig (32) aufweist, wobei der Spulenkäfig (32) eine Mehrzahl von Spulen (34a - 34d) aufnimmt,
**dadurch gekennzeichnet,**
**dass** der Spulenkäfig vier Spulen (34a - 34 d) aufweist, wobei jeweils zwei ein Spulenpaar bildende Spulen (34a, 34c; 34b, 34d) diagonal zueinander gegenüberliegend in dem Spulenkäfig (32) angeordnet sind, wobei die Spulen eines Spulenpaars zu gleicher Zeit in identischer Weise bestrombar sind, wobei der Spulenkäfig (32) axial angeordnete Schlitze (36) zeigt, die der Aufnahme von Jochen (38) dienen, wobei die Joche (38) mit den vier Spulen (34a - 34d) vier Magnetkreise bilden, und wobei der Stator (30) darüber hinaus eine Rückschlussplatte (40) umfasst, die ebenfalls Schlitze (42) zur Aufnahme der Joche (44) umfasst.

2. Elektromotorisch arbeitende Vorrichtung (1) zum Bilden einer Dreherkante, umfassend einen Rotor (10) mit zwei diagonal zueinander gegenüberliegend in dem Rotor (10) angeordneten Fadenführungsösen (14) für die Dreherfäden, sowie einen den Rotor (10) aufnehmenden Stator (30), wobei der Stator (30) einen Spulenkäfig (32) aufweist, wobei der Spulenkäfig (32) eine Mehrzahl von Spulen (35a - 35f) aufnimmt,
**dadurch gekennzeichnet,**
**dass** der Spulenkäfig (32) sechs Spulen (35a - 35f) aufnimmt, wobei jeweils drei im Winkel von 120° zueinander angeordnete Spulen (35a, 35c, 35e; 35b, 35d, 35f) zu gleicher Zeit in identischer Weise bestrombar sind, wobei der Spulenkäfig (32) axial angeordnete Schlitze (36) zeigt, die der Aufnahme von Jochen (38) dienen, wobei die Joche (38) mit den sechs Spulen (35a - 35f) sechs Magnetkreise bilden, und wobei der Stator (30) darüber hinaus eine Rückschlussplatte (40) umfasst, die ebenfalls Schlitze (42) zur Aufnahme der Joche (44) umfasst.

3. Elektromotorisch arbeitende Vorrichtung (1) nach einem der voranstehenden Ansprüche,
**dadurch gekennzeichnet,**
**dass** die Spulen (34a - 34d; 35a - 35f) nierenförmig ausgebildet sind.

4. Elektromotorisch arbeitende Vorrichtung (1) nach einem der voranstehenden Ansprüche,
**dadurch gekennzeichnet,**
**dass** der Spulenkäfig (32) des Stators (30) zur Verminderung von Wirbelströmen aus einem elektrisch nicht leitfähigen Material, insbesondere einem Kunststoff, ausgebildet ist.

5. Elektromotorisch arbeitende Vorrichtung (1) nach einem der voranstehenden Ansprüche,
**dadurch gekennzeichnet,**
**dass** der Rotor (10) eine Magnetscheibe (16) aufweist, wobei die Magnetscheibe (16) eine Mehrzahl von abwechselnd positiv und negativ magnetisierten Segmenten (17) aufweist, die in axialer Richtung des Rotors (10) ausgerichtet sind.

6. Elektromotorisch arbeitende Vorrichtung (1) nach einem der voranstehenden Ansprüche,
**dadurch gekennzeichnet,**
**dass** der Rotor (10) eine Laufhülse (12) zur Aufnahme der Magnetscheibe (16) und eines Lagers (18) aufweist, wobei die Laufhülse (12) die beiden diagonal einander gegenüberliegenden Fadenführungsösen (14) aufweist.

7. Elektromotorisch arbeitende Vorrichtung (1) nach Anspruch 6,
**dadurch gekennzeichnet,**
**dass** die Fadenführungsösen (14) Einsätze (15) zum Verschleißschutz aufweisen.

8. Elektromotorisch arbeitende Vorrichtung (1) nach Anspruch 6,
**dadurch gekennzeichnet,**
**dass** das Lager (18) als Wälzlager ausgebildet ist.

9. Elektromotorisch arbeitende Vorrichtung (1) nach mindestens einem der Ansprüche 1 oder 2,
**dadurch gekennzeichnet,**
**dass** die elektromotorisch arbeitende Vorrichtung (1) eine Steuerung aufweist, wobei durch die Steuerung die Bestromung der Spulen (34a - 34d; 35a - 35f) erfolgt.

10. Projektilwebmaschine mit mindestens einer Schnittgasse zur Teilung der Gewebebahn,
**gekennzeichnet durch**
mindestens eine in der Schnittgasse angeordnete Vorrichtung (1) gemäß einem oder mehrerer der Ansprüche 1 bis 9.

11. Projektilwebmaschine nach Anspruch 10,
**dadurch gekennzeichnet,**
**dass** der Kettbaum der Projektilwebmaschine durchgängig ausgebildet ist.

## Claims

1. A device using an electric motor (1) for forming a leno selvedge, comprising a rotor (10) with two thread guide eyelets (14) for the leno threads, disposed diagonally opposite each other in the rotor (10), as well as a stator (30) receiving the rotor (30), wherein the stator (30) comprises a coil cage (32), wherein the coil cage (32) houses a plurality of coils (34a-34d),
**characterized in that**
the coil cage comprises four coils (34a-34d), wherein two respective coils (34a, 34c; 34b, 34d) forming a pair of coils are disposed diagonally opposite each other in the coil cage (32), wherein the coils of one coil pair can be identically energized at the same time, wherein the coil cage (32) features axially disposed slots (36), which serve to receive yokes (38), wherein the yokes (38) with the four coils (34a-34d) form four magnetic circuits, and wherein the stator (30) furthermore comprises a return plate (40), which also comprises slots (42) for receiving the yokes (44).

2. A device (1) using an electric motor for forming a leno selvedge comprising a rotor (10) with two thread guide eyelets (14) for the leno threads, disposed diagonally opposite each other in the rotor (10), as well as a stator (30) receiving the rotor (30), wherein the stator (30) comprises a coil cage (32), wherein the coil cage (32) houses a plurality of coils (35a-35f),
**characterized in that**
the coil cage (32) houses six coils (35a-35f), wherein respectively three coils (35a, 35c, 35e; 35b, 35d, 35f) arranged at an angle of 120° relative to each other can be identically energized at the same time, wherein the coil cage (32) features axially disposed slots (36), which serve to receive yokes (38), wherein the yokes (38) with the six coils (35a-35f) form six magnetic circuits, and wherein the stator (30) furthermore comprises a return plate (40), which also comprises slots (42) for receiving the yokes (44).

3. The device (1) using an electric motor according to one of the aforementioned claims,
**characterized in that**
the coils (34a-34d; 35a-35f) are kidney-shaped.

4. The device (1) using an electric motor according to one of the aforementioned claims,
**characterized in that**
the coil cage (32) of the stator (30) is formed of an electrically nonconductive material, in particular a synthetic material, in order to reduce eddy currents.

5. The device (1) using an electric motor according to one of the aforementioned claims,
**characterized in that**
the rotor (10) has a magnetic disc (16), wherein the magnetic disc (16) has a plurality of alternatingly positively and negatively magnetized segments (17), which are oriented in the axial direction of the rotor (10).

6. The device (1) using an electric motor according to one of the aforementioned claims,
**characterized in that**
the rotor (10) has a bearing sleeve (12) for receiving the magnetic disc (16) and a bearing (18), wherein the bearing sleeve (12) comprises the two diagonally opposed thread guide eyelets (14).

7. The device (1) using an electric motor according to claim 6,
**characterized in that**
the thread guide eyelet (14) comprises inserts (15) for protection against wear.

8. The device (1) using an electric motor according to claim 6,
**characterized in that**
the bearing (18) is designed as a rolling bearing.

9. The device (1) using an electric motor according at least one of the claims 1 or 2,
**characterized in that**
the device using an electric motor (1) has a control unit, the energizing of the coils (34a-34d; 35a-35f) being carried out by the control unit.

10. A projectile weaving machine with at least one cutting lane for separating the woven fabric panel,
**characterized by**
at least one device (1) according to one or several of the claims 1 to 9 disposed in the cutting lane.

11. The projectile weaving machine according to claim 10,
**characterized in that**
the warp beam of the projectile weaving machine is formed in a continuous manner.

## Revendications

1. Dispositif (1) fonctionnant au moyen d'un moteur électrique pour former une lisière à pas de gaze, comprenant un rotor (10) avec deux oeillets de guidage de fil (14) pour les fils de tour disposés dans le rotor (10) de manière diagonalement opposée l'un à l'autre, ainsi qu'un stator (30) recevant le rotor (10), où le stator (30) comporte une cage à bobines (32), où la cage à bobines (32) reçoit une pluralité de bobines (34a-34d),
**caractérisé en ce que**
la cage à bobines comporte quatre bobines (34a-34d), où deux bobines respectives (34a, 34c ; 34b, 34d) formant une paire de bobines sont disposées de manière diagonalement opposée l'une à l'autre dans la cage à bobines (32), où les bobines d'une paire de bobines peuvent être mises sous tension au même moment et de manière identique, où la cage à bobines (32) présente des fentes (36) agencées axialement qui servent à recevoir des culasses (38), où les culasses (38) forment avec les quatre bobines (34a-34d) quatre circuits magnétiques, et où le stator (30) comprend en outre une plaque de retour (40) qui comprend également des fentes (42) pour recevoir les culasses (44).

2. Dispositif (1) fonctionnant au moyen d'un moteur électrique pour former une lisière à pas de gaze, comprenant un rotor (10) avec deux oeillets de guidage de fil (14) pour les fils de tour disposés dans le rotor (10) de manière diagonalement opposée l'un à l'autre, ainsi qu'un stator (30) recevant le rotor (10), où le stator (30) comporte une cage à bobines (32), où la cage à bobines (32) reçoit une pluralité de bobines (35a-35f),
**caractérisé en ce que**
la cage à bobines (32) comporte six bobines (35a-35f), où trois bobines respectives (35a, 35c, 35e ; 35b, 35d, 35f) disposées de manière à former un angle de 120° les unes par rapport aux autres, peuvent être mises sous tension au même moment et de manière identique, où la cage à bobines (32) présente des fentes (36) agencées axialement qui servent à recevoir des culasses (38), où les culasses (38) forment avec les six bobines (35a-35f) six circuits magnétiques, et où le stator (30) comprend en outre une plaque de retour (40) qui comprend également des fentes (42) pour recevoir les culasses (44).

3. Dispositif (1) fonctionnant au moyen d'un moteur électrique selon l'une des revendications précédentes,
**caractérisé en ce que**
les bobines (34a-34d ; 35a-35f) sont réalisées en forme de reins.

4. Dispositif (1) fonctionnant au moyen d'un moteur électrique selon l'une des revendications précédentes,
**caractérisé en ce que**
la cage à bobines (43) du stator (30) est composée d'un matériau électriquement non conducteur, en particulier une matière synthétique, afin de réduire les courants de Foucault.

5. Dispositif (1) fonctionnant au moyen d'un moteur électrique selon l'une des revendications précédentes,
**caractérisé en ce que**
le rotor (10) comporte un disque magnétique (16), où le disque magnétique (16) comporte une pluralité de segments (17) magnétisés en alternance positivement et négativement qui sont orientés dans la direction axiale du rotor (10).

6. Dispositif (1) fonctionnant au moyen d'un moteur électrique selon l'une des revendications précédentes,
**caractérisé en ce que**
le rotor (10) comporte une douille (12) destinée à recevoir le disque magnétique (16) et un palier (18), où la douille (12) comporte les deux oeillets de guidage de fil (14) diagonalement opposés.

7. Dispositif (1) fonctionnant au moyen d'un moteur électrique selon la revendication 6,
**caractérisé en ce que**
l'oeillet de guidage de fil (14) comporte des inserts (15) de protection contre l'usure.

8. Dispositif (1) fonctionnant au moyen d'un moteur électrique selon la revendication 6,
**caractérisé en ce que**
le palier (18) est un roulement.

9. Dispositif (1) fonctionnant au moyen d'un moteur électrique selon au moins une des revendications 1 ou 2,
**caractérisé en ce que**
le dispositif (1) fonctionnant au moyen d'un moteur électrique comporte une commande, où la mise sous tension des bobines (34a-34d ; 35a-35f) est mise en oeuvre par la commande.

10. Métier à tisser à projectile avec au moins une voie de découpe pour séparer la bande de tissu,
**caractérisé par**
au moins un dispositif (1) selon l'une ou plusieurs des revendications 1 à 9 disposé dans la voie de découpe.

11. Métier à tisser à projectile selon la revendication 10,
**caractérisé en ce que**
l'ensouple de chaîne du métier à tisser à projectile est formé de manière continue.
